# DEMANDE DE BREVET EUROPEEN

(11) **EP 2 639 153 A1**
(43) Date de publication de la demande: **18.09.2013**
(21) Numéro de dépôt: 13001272.7
(22) Date de dépôt: 13.03.2013
(51) Int. Cl.: B64C 7/00, B64C 17/00

(54) **Aéronef comprenant des carénages visant à corriger sa dissymétrie ou son asymétrie latérale**

(30) Priorité: 13.03.2012 FR 1252236
(71) Demandeur: Airbus Operations, 31060 Toulouse (FR)
(72) Inventeur: Guichot, M. Cyrll, 31000 Toulouse (FR); Latourelle, M. Fabien, 31200 Toulouse (FR)
(74) Mandataire: Santarelli

(57) **Abrégé**

Un aéronef (1) présentant une asymétrie ou une dissymétrie géométrique latérale et qui comprend au moins une paire d'ailes (6, 8) à chacune desquelles sont fixées au moins un carénage (12, 14, 16, 22, 24, 26), chaque carénage (12, 14, 16, 22, 24, 26) comprenant une surface raccordée à l'intrados (42) de l'aile et qui s'étend longitudinalement dans la direction de l'axe du fuselage (2).

Selon l'invention, la surface d'au moins un des carénages (12, 14, 16, 22, 24, 26) présente au moins une déformation géométrique locale qui est adaptée à générer un moment de roulis de correction (34) en vue de compenser le moment de roulis indésirable (27) produit par l'asymétrie ou la dissymétrie latérale de l'aéronef.

## Description

L'invention est relative à un aéronef.

De façon générale, les aéronefs sont équipés de nombreux équipements qui sont situés sous leurs voilures (sur l'intrados de leurs ailes par exemple). Des carénages sont disposés sur ou autour de ces équipements afin de limiter l'impact de leur présence sur les performances aérodynamiques de l'appareil.

Toutefois, selon leur disposition, la présence de ces équipements et des carénages associés peuvent générer une asymétrie ou une dissymétrie latérale de la voilure. Autrement dit le centre de gravité de l'aéronef ainsi équipé ne se situe pas dans le plan de symétrie des ailes.

A titre d'exemple, un système d'éolienne de secours ou RAT (« Ram Air Turbine » en terminologie anglo-saxonne), qui se déploie en cas de panne des sources d'énergie des moteurs, n'est disponible que sur une seule des ailes. Sa présence est donc à l'origine d'une asymétrie latérale. D'autres éléments non situés sur les ailes (sur le fuselage par exemple) peuvent également être à l'origine d'une asymétrie.

Dans un autre cas de figure, les ailes présentant chacune le même nombre de carénages, le volume et/ou la masse de ceux-ci peut varier d'une aile à l'autre, générant une dissymétrie latérale.

Au cours d'un vol, une telle dissymétrie ou asymétrie engendre un moment de roulis permanent indésirable qu'il est préférable de corriger.

Pour cela, il est connu de braquer les volets en début de vol afin de générer un moment de roulis contraire à celui généré par la dissymétrie ou l'asymétrie.

Alternativement, il est connu de fixer, par exemple à l'aide de boulons, des cales sur l'intrados du volet externe afin d'obtenir un effet similaire en modifiant l'écoulement de l'air et la portance locale de l'aile concernée.

Ces deux solutions possèdent cependant des désavantages.

En effet, le braquage préventif du volet nécessite un temps de mise en oeuvre important. En outre, cette opération est à renouveler à chaque vol. Il en résulte donc non seulement une perte de temps, mais une perte d'énergie pour mettre en oeuvre cette solution.

Les cales, quant à elles, augmentent la charge sur le volet, induisent un phénomène de traînée, et générèrent des contraintes de fabrication sur l'épaisseur du culot du volet. Ceci se traduit par une perte de carburant et une augmentation des coûts de fabrication.

L'invention se propose de remédier à au moins un de ces inconvénients.

L'invention concerne un aéronef comprenant un fuselage et au moins une paire d'ailes disposées de part et d'autre du fuselage de façon symétrique par rapport à un plan de symétrie des ailes, au moins un carénage étant fixé à chacune des ailes, chaque carénage comprenant une surface de carénage raccordée à l'intrados de l'aile et qui s'étend longitudinalement dans la direction de l'axe longitudinal du fuselage, l'aéronef présentant une asymétrie ou une dissymétrie latérale telle que le centre de gravité de l'aéronef n'est pas situé dans le plan de symétrie des ailes,
**caractérisé en ce que** ladite surface de carénage présente au moins une déformation géométrique locale qui est adaptée à générer un moment de roulis de correction en vue de compenser le moment de roulis indésirable produit par l'asymétrie ou la dissymétrie latérale de l'aéronef.

Un carénage selon l'invention permet ainsi de générer une dissymétrie de portance entre les deux ailes, ce qui induit, par l'intermédiaire du bras de levier entre le centre de gravité de l'avion et le point de l'application de la portance, un moment de roulis corrigeant l'asymétrie ou la dissymétrie latérale de l'avion.

Ce moment de roulis produit un effet équivalent à un pré-braquage des volets.

Grâce à ces dispositions, toute modification du bord de fuite d'un équipement sur lequel est appliqué le carénage est évitée. La charge de la voilure n'est pas non plus augmentée.

La mise en oeuvre d'une telle solution est également simple, économique et définitive, contrairement à un braquage préventif des volets qui doit se faire à chaque vol.

En particulier, la modification du carénage est réalisée de manière à conserver un rapport intéressant entre le taux de roulis obtenu et la traînée induite.

Selon une caractéristique possible de l'invention, les ailes comprenant des volets, les carénages présentant une déformation géométrique locale sont des carénages de cinématique des volets (« flap track fairing » en terminologie anglo-saxonne)

Selon une caractéristique possible de l'invention, la déformation locale comprend un allongement du carénage dans la direction de l'axe du fuselage.

Il s'agit là d'une conception facile à mettre en oeuvre à partir d'une structure classique de carénage.

Plus particulièrement, l'allongement du carénage se fait vers l'avant de l'aéronef.

Une configuration vers l'avant permet de tirer parti au mieux de l'effet de portance créé par l'allongement et de réduire les effets de turbulence éventuels.

Cet allongement représente par exemple une augmentation de l'ordre de 20% de sa longueur initiale.

Il s'agit là d'un allongement raisonnable permettant de créer un moment de roulis suffisant sans trop modifier la conception du carénage.

Une telle augmentation (et, de façon plus générale, ladite au moins une déformation géométrique locale) a une localisation et une amplitude qui dépendent notamment de paramètres aérodynamiques de l'aéronef.

Pour obtenir l'effet recherché sur la portance de la voilure, il est préférable de tenir compte de ces paramètres pour conformer localement la surface concernée du carénage.

Ces paramètres aérodynamiques sont, selon une caractéristique possible de l'invention, ceux relatifs au fuselage, aux ailes, aux nacelles de moteurs et la vitesse de l'aéronef.

Selon une caractéristique possible de l'invention, ladite au moins une déformation géométrique locale comprend une modification du rayon de courbure local d'au moins une zone de la surface de carénage considérée.

Selon une caractéristique possible de l'invention, ladite au moins une déformation géométrique locale comprend l'ajout une convexité locale.

Ceci permet de modifier localement la portance et donc d'influer sur le taux de roulis de l'aéronef.

Plus particulièrement, la convexité locale prend la forme d'une bosse.

Selon une caractéristique possible, la bosse est située à l'avant du carénage.

D'autres caractéristiques et avantages apparaitront au cours de la description qui va suivre, donnée à titre d'exemple non limitatif et faite en référence aux dessins annexés, sur lesquels :
- la figure 1 est une représentation schématique d'une coupe transversale d'un aéronef selon l'invention ;
- la figure 2 est une représentation schématique d'une vue de dessous d'une aile de l'aéronef de la figure 1 ;
- la figure 3 est une représentation schématique d'une coupe longitudinale de l'aile de la figure 2.

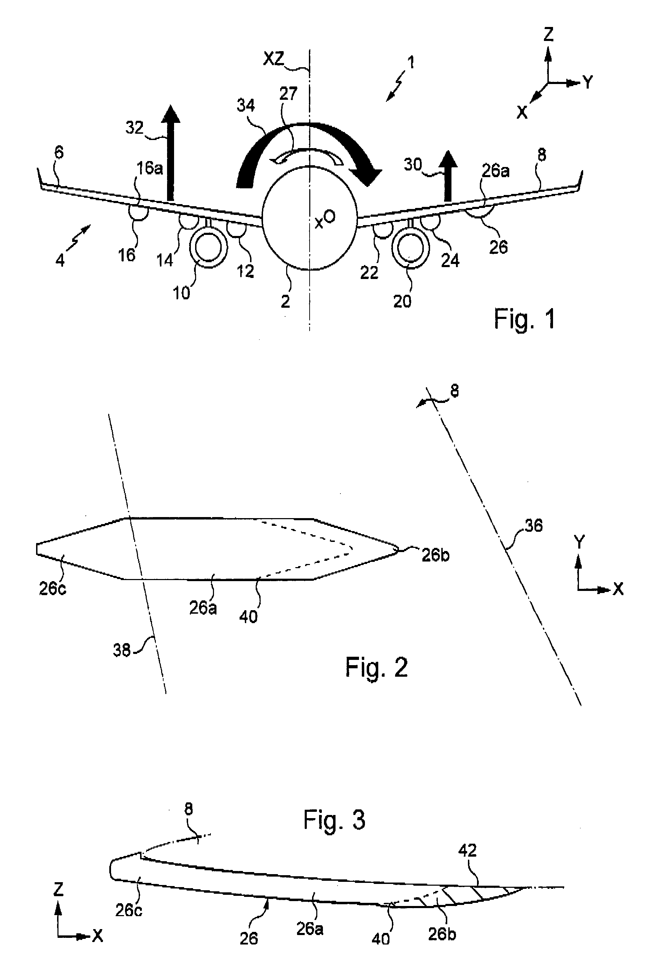

Un aéronef selon l'invention est représenté à la figure 1.

Cet aéronef 1 comprend un fuselage 2 et une voilure 4.

La voilure 4 comprend une aile gauche 6 et une aile droite 8 (la gauche et la droite étant celles de la figure 1), symétriques par rapport au plan longitudinal XZ, X étant l'axe longitudinal du fuselage 2. Le plan longitudinal XZ est un plan vertical lorsque l'aéronef est au sol.

Disposés sous l'aile gauche 6 (fixés à son intrados) se trouvent un moteur 10, par exemple un turboréacteur, ainsi que, successivement, un premier carénage gauche 12 (le plus proche du fuselage), un deuxième carénage gauche 14 et un troisième carénage gauche 16 (le plus éloigné du fuselage).

De même, disposés sous l'aile droite 8 se trouvent un moteur droit 20, ainsi qu'un premier carénage droit 22 (le plus proche du fuselage), un deuxième carénage droit 24 et un troisième carénage droit 26 (le plus éloigné du fuselage).

Chacun des carénages est disposé autour d'un certain nombre d'équipements (non représentés) de manière à limiter l'impact de la présence de ces derniers sur l'aérodynamique de l'avion.

Ces équipements ont chacun une masse, un volume et/ou une disposition qui sont tels que le centre de gravité O de l'avion n'est pas situé sur le plan XZ mais décalé par rapport à ce dernier.

De ce fait, au cours du vol, un moment de roulis indésirable 27 autour de l'axe X est généré. L'invention vise à y remédier.

Dans le mode de réalisation de l'invention présenté sur cette figure, les carénages sont au nombre de six, à raison de trois par aile, Toutefois, ce nombre ainsi que la façon dont ils sont répartis sur chaque aile peut varier.

Le premier carénage gauche 12 et le premier carénage droit 22 sont ici identiques et disposés sur leurs ailes respectives de façon symétrique par rapport au plan XZ. Il en est de même pour le deuxième carénage gauche 14 et le deuxième carénage droit 24.

Le troisième carénage droit 26, en revanche, est de forme différente du troisième carénage gauche 16. En particulier, il s'étend sur l'intrados de l'aile droite 8 sur une surface 26a plus large dans le sens de l'allongement de l'aile droite 8 que la surface 16a sur laquelle s'étend le troisième carénage 16.

De ce fait, au cours du vol, l'aile droite 8 subira un effort de portance droit 30 de valeur différente de celle l'effort de portance gauche 32 subi par l'aile gauche 6.

La différence de valeur des efforts 30, 32 produit un moment de roulis de correction 34 autour de l'axe X.

Selon l'invention, la forme du troisième carénage droit 26 est choisie de manière à ce que le moment de roulis de correction 34 produit compense le moment de roulis indésirable 27.

La localisation et l'amplitude d'une ou plusieurs formes ou déformations géométriques conférées localement à la surface du troisième carénage droit 28 dépendent notamment de paramètres aérodynamiques de l'aéronef de manière à modifier la portance locale au niveau du carénage.

Ces paramètres sont notamment la vitesse de l'aéronef et des paramètres relatifs au fuselage, à la voilure et aux moteurs.

On va maintenant décrire plus précisément la forme du troisième carénage de volet droit 26 en référence aux figures 2 et 3 qui le montrent en vue de dessous et en coupe longitudinale (plan XZ). On a également représenté en pointillés le profil de la surface du carénage (qui correspond par exemple au profil des autres carénages de la figure 1) en l'absence de l'invention.

On notera que sur ces deux figures, l'avant de l'aéronef est situé vers la droite, tandis que l'arrière est situé vers la gauche.

Le carénage de volet 26 a une forme de révolution symétrique par rapport à l'axe X d'extension longitudinale du fuselage et à l'axe Y perpendiculaire à ce dernier.

Il comprend une partie centrale 26a sensiblement cylindrique, une partie proximale 26b situé à l'extrémité de la partie centrale la plus proche du bord d'attaque 36 de l'aile 8, et une partie distale 26c située à son extrémité opposée.

Les parties proximale et distale ont par exemple chacune une forme qui va en s'amincissant vers leur extrémité libre.

Dans le mode de réalisation associé à cette figure, les parties proximale 26b et distale 26c sont situées à égale distance du centre de la partie centrale 26a, mais d'autres configurations sont envisageables.

On remarquera à cet égard que le carénage 26 est situé sur l'intrados de l'aile 8 de manière à ce que le début de la partie distale 26c qui se rétrécit progressivement soit situé en dessous du bord de fuite 38 de l'aile.

La partie distale 26c a une forme générale en ogive dont la pointe est sectionnée dans le plan YZ, ou autrement dit, plate.

L'angle formé entre la partie centrale 26a et la paroi inclinée de la partie distale 26c est ici aigu, mais peut varier.

Comme on le peut le voir sur la figure 3, la partie distale 26c constitue dans sa partie supérieure un prolongement de l'aile 8 et est à cet égard agencée localement à fleur de l'extrados de celle-ci.

La partie proximale 26b, quant à elle, comprend une déformation géométrique locale de sa surface externe à partir de sa jonction 40 avec la partie centrale 26a.

Dans le mode de réalisation associé aux figures 2 et 3, cette déformation locale correspond à une convexité locale, ou bosse, qui s'étend de façon principale longitudinalement le long du fuselage (le long de l'axe X) et de façon moins prononcée, suivant l'axe Z.

Il s'agit ici en quelque sorte d'une double convexité qui s'étend dans deux directions perpendiculaires. Il convient de noter que la double convexité peut s'accompagner d'une troisième convexité dans la troisième direction Y selon une variante.

Selon d'autres variantes, la double convexité peut s'étendre dans des directions différentes telles que X et Y ou Y et Z.

On notera que la convexité peut alternativement être simple et s'étendre, par exemple, uniquement suivant un axe tel que l'axe X.

Tout ce qui vient d'être dit à propos des convexités s'applique à d'autres types de carénages et à d'autres configurations d'aéronef.

Comme on peut le voir par rapport à la ligne en pointillés, l'allongement du carénage le long de l'axe X induit par la déformation de la partie proximale 26b représente une augmentation de 20% de sa longueur initiale.

Plus précisément, l'écartement entre la surface inférieure de la partie proximale 26b et l'intrados de l'aile droite 8 augmente à partir de la surface inférieure de la jonction 40 avec la partie centrale 26a jusqu'à la jonction avec l'intrados 42.

Un rayon de courbure constant peut toutefois alternativement être envisagé, de même qu'une progression non linéaire de ce dernier.

Dans tous les cas, une telle déformation géométrique locale est apte à modifier de façon contrôlée l'écoulement de l'air sous la voilure, ce qui génère une différence de portance par rapport à un carénage situé sur l'aile opposée, comme par exemple le troisième carénage gauche 16.

Cette dissymétrie de portance (différence entre les efforts de portance gauche 32 et droit 30) induit, par l'intermédiaire du bras de levier entre le centre de gravité de l'avion et le point de l'application de la portance, le moment de roulis de correction 34 qui corrige la dissymétrie géométrique latérale de l'avion en compensant le moment indésirable 27.

La déformation géométrique est notamment réalisée en fonction du moment de correction désiré. Elle dépend ainsi des conditions de vol, des paramètres associés à l'aéronef et des systèmes qui y sont embarqués telles que les RAF.

Pour cela on fait varier sa localisation le long de la partie centrale 26a et l'amplitude de son rayon de courbure.

Sur un aéronef de type A330 ou A300, des calculs numériques ont permis d'évaluer à la vitesse de croisière l'impact sur le roulis de la modification de la forme du troisième carénage droit 26, Le taux de roulis est ainsi modifié de manière à correspondre à un DCI (« Design Change Instruction » en terminologie anglo-saxonne) de -0,0005.

En outre, de manière avantageuse, l'impact sur le coefficient de traînée est négligeable pour une plage d'utilisation de l'aéronef (valeur de la différence inférieure 0,1 points de traînée ou « drag count » en terminologie anglo-saxonne, soit 0.04% de traînée).

Dans un autre mode de réalisation non représenté, d'autres carénages, en plus ou à la place du troisième carénage droit 26, peuvent être munis d'une ou de plusieurs déformations géométriques locales selon l'endroit où sont placés les équipements générant l'asymétrie latérale de l'aéronef.

## Revendications

1. Aéronef comprenant un fuselage et au moins une paire d'ailes (6, 8) disposées de part et d'autre du fuselage (2) de façon symétrique par rapport à un plan de symétrie des ailes, au moins un carénage (12, 14, 16, 22, 24, 26) étant fixé à chacune des ailes, chaque carénage (12, 14, 16, 22, 24, 26) comprenant une surface de carénage raccordée à l'intrados (42) de l'aile (6,8) et qui s'étend longitudinalement dans la direction de l'axe longitudinal du fuselage (2), l'aéronef présentant une asymétrie ou une dissymétrie latérale telle que le centre de gravité (O) de l'aéronef n'est pas situé dans le plan de symétrie des ailes (6,8),
**caractérisé en ce que** ladite surface de carénage présente au moins une déformation géométrique locale qui est adaptée à générer un moment de roulis de correction (34) en vue de compenser le moment de roulis indésirable (27) produit par l'asymétrie ou la dissymétrie latérale de l'aéronef.

2. Aéronef selon la revendication 1, **caractérisé en ce que** les ailes (6,8) comportent des volets, les carénages (12, 14, 16, 22, 24, 26) qui présentent une déformation géométrique locale étant des carénages de cinématique des volets.

3. Aéronef selon la revendication 1 ou 2, **caractérisé en ce que** ladite au moins une déformation géométrique locale comprend un allongement du carénage (12, 14, 16, 22, 24, 26) dans la direction longitudinale de l'axe du fuselage (2).

4. Aéronef selon la revendication 3, **caractérisé en ce que** l'allongement du carénage (12, 14, 16, 22, 24, 26) se fait vers l'avant de l'aéronef.

5. Aéronef selon l'une quelconque des revendications 3 à 4, **caractérisé en ce que** l'allongement du carénage (12, 14, 16, 22, 24, 26) représente une augmentation de 20% de sa longueur initiale.

6. Aéronef selon l'une quelconque des revendications 1 à 5, **caractérisé en ce que** ladite au moins une déformation géométrique locale présente une localisation et une amplitude qui dépendent notamment de paramètres aérodynamiques de l'aéronef.

7. Aéronef selon la revendication 6, **caractérisé en ce que** les paramètres aérodynamiques sont ceux relatifs au fuselage (2), aux ailes (6, 8), aux nacelles de moteurs (10, 20) et à la vitesse de l'aéronef.

8. Aéronef selon l'une quelconque des revendications 1 à 7, **caractérisé en ce que** ladite au moins une déformation géométrique locale comprend une modification du rayon de courbure local d'au moins une zone de la surface de carénage (12, 14, 16, 22, 24, 26) considérée.

9. Aéronef selon l'une quelconque des revendications 1 à 8, **caractérisé en ce que** ladite au moins une déformation géométrique locale comprend une convexité locale.

10. Aéronef selon la revendication 9, **caractérisé en ce que** la convexité locale prend la forme d'une bosse.

11. Aéronef selon la revendication 10, **caractérisé en ce que** la bosse est située à l'avant du carénage (12, 14, 16, 22, 24, 26).
